(19) Europäisches Patentamt

European Patent Office

Office européen des brevets

(11) **EP 1 271 802 A1**

(12) **EUROPEAN PATENT APPLICATION**

(43) Date of publication:
02.01.2003 Bulletin 2003/01

(51) Int Cl.⁷: $H04B\ 7/06$, $H01Q\ 3/26$

(21) Application number: 01830427.9

(22) Date of filing: 22.06.2001

(84) Designated Contracting States:
AT BE CH CY DE DK ES FI FR GB GR IE IT LI LU MC NL PT SE TR
Designated Extension States:
AL LT LV MK RO SI

(71) Applicant: **Siemens Information and Communication Networks S.p.A.**
20126 Milano (IT)

(72) Inventors:
• **De Angeli, Alfonso**
20010 Cornaredo (MI) (IT)

• **Donati, Marcello**
20131 Milano (IT)

(74) Representative: **Giustini, Delio**
Siemens Information and
Communication Networks S.p.A.
Palazzo Gorky
Via Monfalcone, 1
20092 Cinisello Balsamo (IT)

(54) **A system and a method for calibrating radio frequency transceiver systems including antenna arrays**

(57)     There are disclosed a system and a method for calibrating radio frequency transceiver systems including antenna arrays based on the physical positions of the arrays. The receiving and transmitting calibration parameters of the antenna array (AAj) of a cell are calculated by using a signal transmitted through the air by the transmitter (Txj) of another communication station (Cj) of the transceiving system that is directly visible to the communication station (Ci) to be calibrated.

The whole RF transceiver system is calibrated by selecting a first communication station of said plurality as a reference or master station and one other cell as a slave cell (Ci); having the transmitter (Txj) of the master cell (Cj) to transmit a known radio signal; determining the receive calibration vectors of the slave station from said a known radio signal; (self) calibrating the slave station by determining transmit calibration vectors adapted to circularly irradiate from said at least other (slave) station; and using the calibrated slave station as a master station for calibrating another station and so on.

*Fig. 1*

EP 1 271 802 A1

## Description

Field of the Invention

The present invention relates to radio frequency antenna arrays and, more particularly, the invention relates to the calibration of radio frequency transceiver systems including antenna arrays to maximize their performance and effectiveness. Preferably said RF signal transceiving system comprises a cellular telephone transceiving system.

The use of antenna arrays in telecommunication systems provides for antenna performance improvements over the use of a single element antenna. These antenna performance improvements include improved directionality, signal to noise ratio, and interference rejection for received signals, and improved directionality, security, and reduced transmit power requirements for transmitted signals. Antenna arrays may be used for signal reception only, for signal transmission only, or for both signal reception and transmission.

Typical antenna array systems consist of an array of antennas and a signal processor that combines the signals going to and coming from the individual array elements. This processing is called beamforming.

A typical application of antenna array systems is in a wireless communication system such as cellular communication system. Such wireless communication systems consist of one or more communications stations, generally called base stations, each communicating with its mobile subscriber units, also called remote terminals and handsets. The antenna array typically is located at the base station. Terminology for the direction of communication comes from conventional satellite communications, with the satellite replaced by the base station. Thus, communication from the remote terminal to the base station is called the uplink, and communications from the base station to the remote terminal is called the downlink. Thus, the antenna array transmits in the downlink direction and receives in the uplink direction. Antenna arrays also may be used in wireless communication systems to add spatial division multiple access (SDMA) capability, which is the ability to communicate with several users at the time over the same "conventional" (FDMA, TDMA or CDMA) channel. Systems that use antenna arrays to improve the efficiency of communications and/or to provide SDMA are called smart antenna systems.

With smart antenna communication systems, during uplink communications, one applies amplitude and phase adjustments to each of the signals received at the antenna array elements to select (i.e., preferentially receive) the signals of interest while minimizing any signals or noise not of interest (i.e. the interference). Such amplitude and phase adjustment can be described by a complex valued weight, the receive weight. The receive weights for all elements of the array can be described by a complex valued vector, the receive weight vector. Similarly, the downlink signal is processed by adjusting the amplitude and phase of the signals that are going to each of the antennas of the antenna array for transmission. Such amplitude and phase control can be described by a complex valued weight, the transmit weight, and the weights for all elements of the array can be described by a complex valued vector, the transmit weight vector. In some systems, the receive (and/or transmit) weights include temporal processing, and in such cases, the receive (and/or transmit) weights may be functions of frequency and applied in the frequency domain or, equivalently, functions of time applied as convolution kernels.

In time division duplex (TDD) systems the uplink and downlink communications with a particular remote user occur at the same frequency but in different time slots. In frequency division duplex (FDD) systems the uplink and downlink communications with a particular remote user occur at the different frequencies.

There exist practical problems that make difficult to determine the transmit weight vector from the receive weight vector for a particular user. In time division duplex (TDD) systems the uplink and downlink communications with a particular remote user occur at the same frequency but different time slots. In frequency division duplex (FDD) systems the uplink and downlink communications with a particular remote user occur at the different frequencies. Because of the well known principle of reciprocity, it might be expected that determining the transmit weight vector from the receive weight vector might be straightforward. However, in the uplink, the received signals that are being processed may be somewhat distorted by the receive apparatus chains associated with each of the antenna elements of the antenna array. The receive apparatus chain includes the antenna element, cables, filters, RF electronics, physical connections, and analog-to-digital converter ("ADC") if processing is digital. In the case of a multielement antenna array, a separate receive apparatus chain is typically provided for each antenna array element, and thus the amplitude and the phase each of the received signals at each element may be distorted differently by each of the receive apparatus chains. A receive weight vector that does not take this into account will be in error, causing less than optimal reception at the base station. However, in practice, communications will still be possible. When one transmits downlink signals through the antenna array, each of the signals radiated by an antenna element goes through a different transmit apparatus chain, thus possibly causing different amplitude and phase shifts in the transmitted signals. If the transmit weight vector was derived from a receive weight vector that did not take the differences in the receive apparatus chains into account, transmission from the base station may be hard to achieve. Further difficulty may result if the transmit weight vector does not take into account differences in the transmit apparatus chains, possibly making communication using such a transmit weight vector not optimal. The purpose of calibration is to determine calibration factors for compensating for the different amplitude and phase errors that occur in the signals in the receive chain and the different amplitude and phase errors that occur in the transmit chain. It should be added that the phase and amplitude shifts that occur in the receive and transmit apparatus chains are, in general, frequency dependent.

Background art

It has been suggested to calibrate the antenna elements of an antenna array by coupling the elements to a signal generator, i.e. without using an air-received signal, but such a method requires an additional hardware component (i.e. a coupler) for injecting into the receive chain a reference signal and moreover does not provide for a calibration of the antenna elements.
In particular this known calibration approach is intrinsically unable to consider the physical features of each radiating elements and therefore the calibration process is affected by an error in case the delay introduced in an antenna elements differs by the delay introduced in the remaining elements of the array.
There is further known a system for calibrating antenna arrays of a plurality of cells in a cellular telephone transceiving system providing with an external transmitting antenna located (either fixedly or in a movable manner) at a predetermined distance from the array of the BTS to be calibrated. Although using an external antenna located at some distance from the array to be calibrated can give good results in laboratory tests since the position of the signal source can be properly chosen, such a system is substantially unpractical if used in the field considering the difficulty to correctly positioning in a real environment said external transmitting antenna. In addition it is to consider that the whole physical path (both the receive and the transmit paths) is to be calibrated, this path including for example the interconnecting cables between the devices that obviously could not be considered when the devices were tested in the factory.
US-A-6 037 898 discloses a method for calibrating a communication station in a TDD system only, without requiring any equipment in addition or external to the communication station. The communications station comprises an antenna array with a plurality of antenna elements, a receiver apparatus chain for each antenna element, and a transmit apparatus chain for each antenna element, each receiver apparatus chain including its antenna element, and each transmit apparatus chain including its antenna element, relative phase and amplitude behaviour of each receiver apparatus chain essentially describable by a receiver apparatus chain transfer function for said each receiver apparatus chain, relative phase and amplitude behaviour of each transmit apparatus chain essentially describable by a transmit apparatus chain transfer function for said each transmit apparatus chain, providing for repeatedly transmitting prescribed signals between pairs of antenna elements for determining calibration factors for each antenna element.
According to the disclosed method, the receive chain and the transmit chain are closed in a loop through the antenna and after the calibration has been accomplished the calibration parameters are evenly splitted and assigned to each path. Since the delay of the receive and transmit path are usually different, the method can easily lead to unacceptable results.

Object and summary of the Invention

It is therefore an object of the present invention to provide an improved system and method for calibrating an antenna array in a communication (base) station of a cellular communication system, and more particularly in a so called third generation Adaptive Smart Antenna system without the requirement for an expensive and complex external source.
It is a further object of the present invention to provide an improved system and method for calibrating a whole radio frequency transceiver system including a plurality of communications stations, each provided with an antenna array without the requirement for expensive and complex external sources.
An advantage of the calibrating system and method of the invention resides in that they do not require the use of dedicated hardware devices. An additional advantage of the invention is that the whole cellular system can be calibrated very quickly by using the transmitters of more than one (already calibrated) cells to calibrate the remaining cells.
The above objects are achieved through a system as claimed in claim 1, and a method as claimed in claim 7. Additional advantages are recited in the dependent claims.

Brief description of the drawings

The invention will now be disclosed with reference to the attached drawings illustrating some preferred embodiments thereof, in which:

　　　Fig. 1 shows a cellular telecommunication system for illustrating the invention;
　　　Fig. 2 shows an antenna array for illustrating the self-calibration steps;
　　　Fig. 3 illustrated the calculation of the direction of arrival of the reference signal;
　　　Fig. 4 is a flow chart illustrating the calibration method of the whole system according to the invention.

Detailed description of a preferred embodiment of the invention.

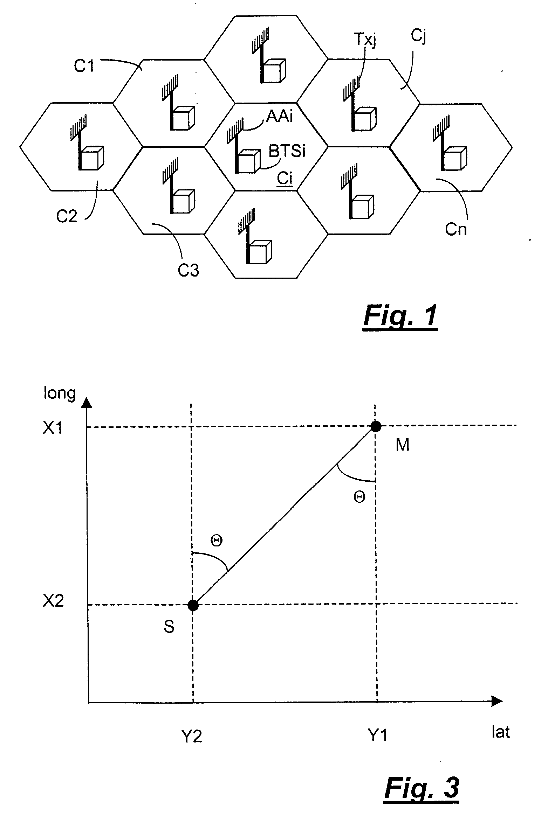

Fig. 1 schematically illustrates a cellular communication system comprising a number of cells. C1, C2, ... Cn, each equipped with a communications station or base station BTS and a receiving-transmitting antenna array AA.

In accordance with the invention, the transmitter Txj of a cell Cj is used as an external signal source to calibrate an antenna array AAi of a cell Ci, under the condition that the antenna array AAj of the calibrating cell is directly visible from the antenna array of the cell Ci to be calibrated.

To the purpose of a correct calibration between the (antenna arrays of the) two cells it is necessary to assure direct visibility between the cell the array of which is being calibrated and the cell containing the communication station used as an external source. Preferably the interacting cells (i. e. the one used as a source and the one(s) to be calibrated), are adjacent to each other. However this requirement is not mandatory.

The above requirement is easily achieved in extra-urban cellular systems, whereas in urban environments it might request some additional attention in the choice/design of the sites.

In the following there is disclosed a method for calibrating the whole transceiver system, which method provides for the intermediate steps of calibrating of the antenna array of the single cells (e.g. as disclosed hereinafter).

At the beginning one cell of the system is selected as a master cell, that is a reference cell the signal of which is used for calibrating the array of one (or more) slave cell(s) of the system.

According to the invention the master cell starts an auto-calibration process of its own transmission path cyclically setting N -1 elements of the array in receiving condition and one element in transmission condition. In this way each element of the array cyclically emits a calibration signal which is received by the remaining N - 1 elements and in this way the transmission path of the array is calibrated.

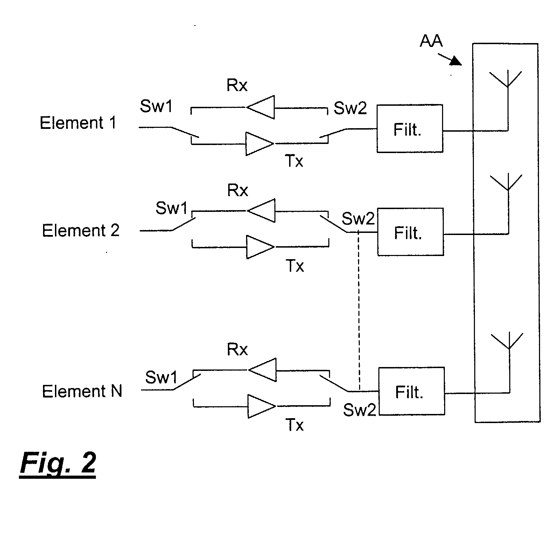

This situation is depicted in figure 2 showing an antenna array AA including N elements connected to N branches, Element 1,....Element N, each one including:

- a first switch SW1
- a receiving unit Rx;
- a transmitting unit TX;
- a second switch SW2;
- a filter Filt adapted to limit the bandwidth of the signal supplied to the antenna.

In fig. 2 the switches SW1 and SW2 of the element Element 1 are positioned in order to connect the transmitter Tx to the relevant antenna, whereas the switches SW1 and SW2 of the elements Element 2...... Element N are positioned in order to connect the receiver Rx to the relevant antennas in order to calibrate the element Element 1.

This calibration process is repeated cyclically acting on said switches SW, in order to calibrate the remaining elements Element 2......Element N, i.e. in order to determine the calibration factor adapted to compensate the different phase errors that occur in the transmitting chain of the single elements.

At the end of this process, the master cell is in condition to emit a reference signal for the neighbouring cells of the system which receive said reference signal having the transmission path duly calibrated.

According to the invention the master cell is in condition to emit a reference signal using a single element of the array or using the N elements.

In this respect it is to note that the direction of arrival of the reference signal is known since each base station knows the direction of arrival of the calibrating signal. This angle can be easily calculated from an external computer on the basis of the relative geographical positions of the cells that are either known or can be obtained though a GPS receiver. Alternatively this parameter could be already configured in each base station for the adjacent stations.

The above data are input to a control computer that further calculates or receives additional parameters such as the distance between the cells, their azimuth, the physical cell characteristics (such as whether the station radiates in all directions or along a given number of directions), and calculates for every single cell the direction of the reference signal the station is going to receive.

From the above mentioned information, the computer for every single cell performs:

- calculation and transmission to every single cell of the configuration parameters relating to the direction of emission of the signal (if and when this latter will be in a master condition);
- calculation of the direction of arrival of the reference signal, for the situation in which the cell operates in a slave condition.
- recording and updating of the list of the cells operating in slave condition and the cells that can be used as master cells.

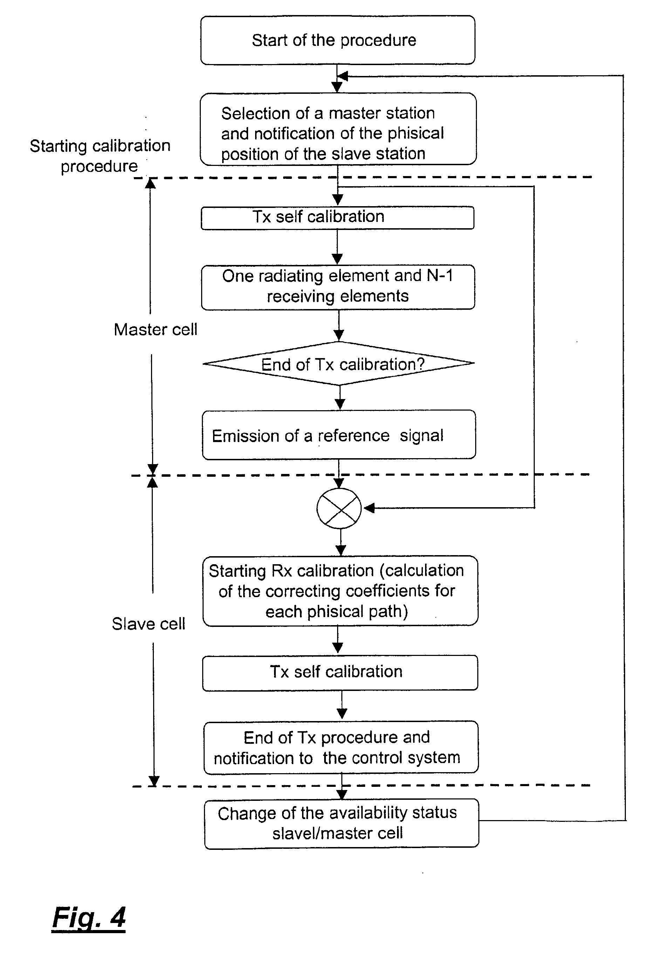

For all the slave cells the computer calculates the signal Direction Of Arrival (DOA) by using the cell geographical position (latitude and longitude) and the information about the cell adjacency. With reference to Fig. 3, where M is a cell operating as a master cell and S a slave cell,

$$tg\theta_n = (X1 - X2)/Y1 - Y2)$$

Where:

- $tg\theta_n$ is the tangent of the angle between the north-south line and the master (reference) signal direction for the nth cell;

- X1 = master cell latitude;
- X2 = slave cell latitude;
- Y1 = master cell longitude;
- Y2 = slave cell longitude;

The value θ is valid for omnidirezional cells, while in the case of cells irradiating along a given number of known directions, a previously known amount (depending on the directivity of the antennas) must be added to the value of θ.

In order to calibrate a single cell, i.e. to find the compensating vectors, a starting cell must be initially and temporarily configured as "first master cell" by using an adjacent cell, where the adjective "first" refers to the time.

The calibration method will now be illustrated with reference to the flow chart of Fig. 4.

At the beginning of the calibration procedure this first cell will transmit a known radio signal through one or more radiating elements of its available array and such a transmission is always omni directional.

At the start of the calibration procedure the master cell radiates a reference signal and the slave cell (s) starts its own (internal) calibration procedure(s).

More particularly, a first communication station is selected as a reference or master station. Then at least one other cell is selected as a slave cell (Ci), the antenna array (AAi) of which is directly visible to the antenna array (AAj) of said master cell (Cj). The transmitter (Txj) of said master cell (Cj) transmit in all directions a known radio signal through at least radiating elements of its array whereby the receive calibration vectors of said slave station (BTSi) are determined from said a known radio signal. Thereafter the (self) calibration of said slave station or each of said slave communication stations is carried out by determining transmit calibration vectors adapted to circularly irradiate from said at least other (slave) station and the or each of said calibrated slave stations are used as a master station for calibrating the remaining stations of the plurality including the old master station.

The old master station has the transmitting path duly calibrated at the end of the Tx self calibration process but not the receiving path and is therefore identified as slave station and the relevant Rx calibration process is performed.

The internal calibration procedure comprises the calibration of the whole receive path, i.e. compensating the receive beamforming coefficients and notifying the control system the accomplishment of such operation; and the calibration of the whole transmit path, i.e. compensating the transmit beamforming coefficients and notifying the control system the accomplishment of such operation.

Following each notification from one cell that the receive and transmit path have been calibrated, the computer updates the list of the slave cells and of the possible (future) master cells.

This way one or more cells are configured as slave cells along the geographical direction to the cell configurated as master. This means that the θ value supplied by the computer is used as reference for calculating the beamforming coefficients.

The procedure is then repeated for all the cells to be calibrated in the communication system.

While a particular embodiment of the present invention has been shown and described, it should be understood that the present invention is not limited thereto since other embodiments may be made by those skilled in the art without departing from the object thereof. It is thus contemplated that the present invention encompasses any and all such embodiments covered by the following claims.

## Claims

1. A system for calibrating the antenna array of a communication station (BTSi) in a cell (Ci) of a RF signal transceiving system (1) including a plurality of cells (C1, .. Cn), the communication station comprising an antenna array (AAj) with a plurality of antenna elements, a receiving apparatus chain (RxC) for each antenna element, and a transmitting apparatus chain (TxC) for each antenna element, in which the receiving and transmitting calibration parameters of said array are calculated by using a known signal transmitted through the air by an external source,
   **characterised in that** said external source is the transmitter (Txj) of another communication station (Cj) that is directly visible and the physical positioning of which, in terms of latitude and longitude, is known to the communication station to be calibrated.

2. A calibration system as claimed in claim 1, **characterised in that** said communication stations are located in cell adjacent to each other.

3. A calibration system as claimed in claim 1, **characterized in that** said communication station to be calibrated includes means adapted to calculate the direction of arrival of said calibration parameters and to calculate the receiving calibration vectors using said received known signal.

4. A calibration system as claimed in claim 1, **characterised in that** the physical positioning of the communication station to be calibrated is stored in the station itself at the moment of its installation or determined through a GPS receiver.

5. A calibration system as claimed in the previous claims, **characterized in that** the transmitter of said another communication station includes means (SW1, SW2) adapted to cyclically connect an antenna of the array to the relevant transmitting apparatus chain and the remaining antennas of the array to the relevant receiving apparatus chain.

6. A calibration system as claimed in the claims 1. to 4., **characterized in that** the transmitter of said communication station to be calibrated includes means (SW1 , SW2) adapted to cyclically connect an antenna of the array to the relevant transmitting apparatus chain and the remaining antennas of the array to the relevant receiving apparatus chain.

7. A method for calibrating an RF cellular transceiver system including a plurality of communications stations (BTS), each provided with an antenna array (AA), **characterised by** the steps of:

   A. selecting a first communication station of said plurality as a reference or master station;
   B. selecting at least one other cell as a slave cell (Ci), the antenna array (AAi) of which is directly visible to the antenna array (AAj) of said master cell (Cj);
   C. having the transmitter (Txj) of said master cell (Cj) to transmit in all directions a known calibration radio signal through at least a radiating elements of its array;
   D. calculating the direction of arrival of the signals in said slave cell using the formula $tg\theta = (X1 - X2)/(Y1 - Y2)$ where:

   - $tg\theta$ is the tangent of the angle between the north-south line and the master (reference) signal direction for the slave cell;
   - X1 = master cell latitude;
   - X2 = slave cell latitude;
   - Y1 = master cell longitude;
   - Y2 = slave cell longitude;

   E. determining the receiving calibration vectors of said slave station (BTSi) from said known radio signal;

8. The method of claim 7, **characterized in that** said selected master station, before the execution of said step C. is adapted to calibrate its own transmission path determining its transmission calibration vectors according to the following steps:

   a) setting the first element of the antenna array in transmission condition and the remaining elements in receiving condition;
   b) having the transmitter of said first element to transmit a known calibration radio signal;
   c) determining the receive calibration vectors of said remaining elements from said a known radio signal;
   d) cyclically setting the remaining elements of the antenna array in transmission condition and repeating said steps a) to c).

9. The method of claim 7, **characterized in that** said selected one other cell as slave cell is adapted to calibrate its own transmission path determining its transmission calibration vectors according to the following steps:

   e) setting the first element of the antenna array in transmission condition and the remaining elements in receiving condition;
   f) having the transmitter of said first element to transmit a known calibration radio signal;
   g) determining the receive calibration vectors of said remaining elements from said a known radio signal;
   h) cyclically setting the remaining elements of the antenna array in transmission condition and repeating said steps a) to c).

10. The method of claims 7 and 9, **characterized in that** of using the or each of said calibrated slave stations as a master station for calibrating the remaining stations of the plurality.

11. The method of claims 7 and 9., **characterised in that** at the end of steps E. and h) the accomplishment of such operation is the notified to the net.

12. The method of claim 11 **characterised in that** it provides for updating a list of the slave cells and of the possible (future) master cells following each notification from one cell that the receive and transmit path have been calibrated.

*Fig. 1*

*Fig. 3*

Fig. 2

Start of the procedure

Starting calibration procedure

Selection of a master station and notification of the phisical position of the slave station

Tx self calibration

One radiating element and N-1 receiving elements

Master cell

End of Tx calibration?

Emission of a reference signal

⊗

Starting Rx calibration (calculation of the correcting coefficients for each phisical path)

Slave cell

Tx self calibration

End of Tx procedure and notification to the control system

Change of the availability status slavel/master cell

## *Fig. 4*

# EP 1 271 802 A1

**European Patent Office**

## EUROPEAN SEARCH REPORT

Application Number

EP 01 83 0427

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.7) |
| D,X | WO 00 31892 A (ARRAYCOMM INC) 2 June 2000 (2000-06-02) * abstract * * page 7, line 14 - page 8, line 17 * * page 25, line 1 - page 29, line 18 * * claims 1-7; figures 3A,3B,4,5 * | 1,2 | H04B7/06 H01Q3/26 |
| A | US 5 546 090 A (ROY III RICHARD H ET AL) 13 August 1996 (1996-08-13) * abstract * * column 1, line 33 - column 2, line 42; claims 1-8 * | 1-12 | |
| | | | TECHNICAL FIELDS SEARCHED (Int.Cl.7) |
| | | | H04B H01Q |

The present search report has been drawn up for all claims

| Place of search | Date of completion of the search | Examiner |
|---|---|---|
| THE HAGUE | 29 November 2001 | Lazaridis, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 271 802 A1

## ANNEX TO THE EUROPEAN SEARCH REPORT
## ON EUROPEAN PATENT APPLICATION NO.

EP 01 83 0427

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2001

| Patent document cited in search report | | Publication date | Patent family member(s) | | Publication date |
|---|---|---|---|---|---|
| WO 0031892 | A | 02-06-2000 | US | 6037898 A | 14-03-2000 |
| | | | WO | 0031892 A1 | 02-06-2000 |
| | | | AU | 2198099 A | 13-06-2000 |
| | | | EP | 1133836 A1 | 19-09-2001 |
| US 5546090 | A | 13-08-1996 | US | 5515378 A | 07-05-1996 |
| | | | WO | 9818272 A1 | 30-04-1998 |
| | | | US | 5592490 A | 07-01-1997 |
| | | | US | 5828658 A | 27-10-1998 |
| | | | AT | 183865 T | 15-09-1999 |
| | | | AU | 670766 B2 | 01-08-1996 |
| | | | AU | 3145493 A | 19-07-1993 |
| | | | CA | 2125571 A1 | 24-06-1993 |
| | | | DE | 69229876 D1 | 30-09-1999 |
| | | | DE | 69229876 T2 | 30-12-1999 |
| | | | EP | 0616742 A1 | 28-09-1994 |
| | | | EP | 0926916 A2 | 30-06-1999 |
| | | | ES | 2137197 T3 | 16-12-1999 |
| | | | FI | 942771 A | 10-06-1994 |
| | | | JP | 7505017 T | 01-06-1995 |
| | | | WO | 9312590 A1 | 24-06-1993 |
| | | | US | 5625880 A | 29-04-1997 |
| | | | US | 5642353 A | 24-06-1997 |

For more details about this annex : see Official Journal of the European Patent Office, No. 12/82

11